# EUROPEAN PATENT APPLICATION

(11) **EP 4 332 822 A1**
(43) Date of publication of application: **06.03.2024**
(21) Application number: 22193191.8
(22) Date of filing: 31.08.2022
(51) Int. Cl.: G06F 40/295

(54) **METHOD AND SYSTEM FOR NAMED-ENTITY RECOGNITION**

(71) Applicant: Siemens Aktiengesellschaft, 80333 München (DE)
(72) Inventor: Langer, Stefan, 80797 München (DE); Yaseen, Usama, 81549 München (DE)
(74) Representative: Siemens Patent Attorneys

(57) **Abstract**

In order to improve the input representation space for named-entity recognition, unstructured text is encoded into several heterogenous embeddings (FT, BERT, GLOVE). These embeddings are then concatenated and fed via an input layer to a neural network that performs the named-entity recognition. This improves the input representation of the named-entity recognition model by efficiently concatenating various kinds of heterogeneous embeddings. The named-entity recognition model can automatically select the relevant information from the pool of concatenated heterogeneous embeddings and thus achieves improved performance. As a result, the capability to optimally represent industrial text is improved over existing solutions. The concatenation of domain-specific and general embeddings can circumvent the effect of catastrophic forgetting when adapting the general embeddings to the target domain via pre-training. For example, a BiLSTM-CRF network consisting of a bidirectional Long Short-term Memory Network (LSTM) and a sequential conditional random layer (CRF) can be chosen to implement the neural network.

## Description

In the industrial domain, significant amounts of valuable information are stored in unstructured form in text documents such as technical guides, repair reports or survey responses. It is necessary to convert this plain text into a structured representation to perform any kind of data analysis. This conversion requires technology that can recognize industrial domain-specific entities or concepts which appear in the text, such as names or identifiers of various components of a gas turbine.

Named-entity Recognition (NER) is a critical primitive component in the Information Extraction pipeline as downstream tasks such as Relation Extraction (RE), Question Answering (QA) etc., depend on it. The performance of NER is strongly influenced by the input representation of the text, i.e., conversion of strings/words to numerical vectors. NER seeks to locate and classify named entities mentioned in unstructured text into pre-defined categories such as device names, part names, locations, time expressions, quantities, percentages, etc.

Modern methods for NER employ various word embeddings as input representation. Popular choices of word embeddings include word2vec, glove, fastText, BERT etc. It is important to note that word embedding representation methods map words in a corpus to a low-dimensional vector, such that the value of each dimension corresponds to a feature and might even have a syntactic or semantic interpretation. The different kinds of word embeddings are typically trained on different large-scale text corpora from the internet. The designer of the industrial NER system typically has to choose one of these embeddings.

According to the state of the art, a designer of an industrial NER system hand-picks one of the above-mentioned embeddings as the input representation layer of the NER model. This decision is primarily based on the relevance of the pre-training data of the embedding method with regard to the target industrial domain (e.g., for NER systems in the biomedical domain it is best to pick up an embedding model pre-trained on biomedical text corpora) and also on the superiority of the model architecture of the embedding method. In most industrial scenarios, the embeddings trained on a general domain (internet) are not optimal for the target domain of the specific industrial setting, therefore, an additional step of "pre-training" on the target domain is required which adapts the embeddings according to the target domain. This step of domain-specific pre-training is crucial to obtain improved performance of NER in an industrial setup.

It is important to note that word embeddings trained on the general domain contain more world knowledge than word embeddings pre-trained on the target domain and this can impact the performance of the NER model; this difference in world knowledge is due to the fact that the domain-adapted word embedding model overrides some world knowledge during the pre-training step. The designers of the NER system typically perform experiments with various kinds of general embeddings and domain-adapted embeddings to select the one which performs best.

It is an object of the present invention to identify a problem in the prior art and to find a technical solution for this.

The objectives of the invention are solved by the independent claims. Further advantageous arrangements and embodiments of the invention are set forth in the respective dependent claims.

According to the method for named-entity recognition, the following operations are performed by components, wherein the components are software components executed by one or more processors and/or hardware components:
- encoding unstructured text into several heterogenous embeddings,
- concatenating the embeddings,
- feeding the concatenated embeddings via an input layer to a neural network, and
- performing, by the neural network, named-entity recognition.

The system for named-entity recognition comprises the following components, wherein the components are software components executed by one or more processors and/or hardware components:
- an encoder, configured for encoding unstructured text into several heterogenous embeddings, and
- a neural network,
   - with an input layer configured for receiving a concatenation of the embeddings, and
   - configured for performing named-entity recognition.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices or any other communication devices that can process data with computer support, processors and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

The method and system, or at least some of their embodiments, improve the input representation of the NER model by efficiently concatenating various kinds of heterogeneous embeddings and therefore, avoid the question of choosing one embedding model over another. The NER model can automatically select the relevant information from the pool of concatenated heterogeneous embeddings and thus achieves improved performance.

The method and system, or at least some of their embodiments, overcome limitations of existing solutions for supervised NER models that typically include embeddings from only one source in the input layer. As a result, the capability to optimally represent industrial text is improved over existing solutions.

The method and system, or at least some of their embodiments, provide a concatenated embedding representation model that can combine heterogeneous embeddings to enrich the input representation space of the NER model.

In an embodiment of the method and system, the several heterogenous embeddings have different model architectures and/or have been trained on different text corpora.

In an embodiment of the method and system, at least one of the several heterogenous embeddings is a general-purpose embedding, and at least one of the several heterogeneous embeddings is a domain-specific industrial embedding.

The concatenation of domain-specific and general embeddings can circumvent the effect of catastrophic forgetting when adapting the general embeddings to the target domain via pre-training; catastrophic forgetting is a well-known phenomenon in neural networks and refers to the tendency of neural networks to abruptly forget previously learned information.

In an embodiment of the method and system, at least one of the several heterogenous embeddings is a fastText embedding, and/or at least one of the several heterogenous embeddings is a BERT embedding, and/or at least one of the several heterogenous embeddings is a GloVe embedding.

In an embodiment of the method and system, the neural network is a BiLSTM-CRF network consisting of a bidirectional Long Short-term Memory Network and a sequential conditional random layer.

The computer program product has program instructions for carrying out the method.

The provision device for the computer program product stores and/or provides the computer program product.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows a first embodiment,
- Fig. 2: shows another embodiment,
- Fig. 3: shows a neural network architecture for named-entity recognition, and
- Fig. 4: shows a flowchart of a possible exemplary embodiment of a method for named-entity recognition.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

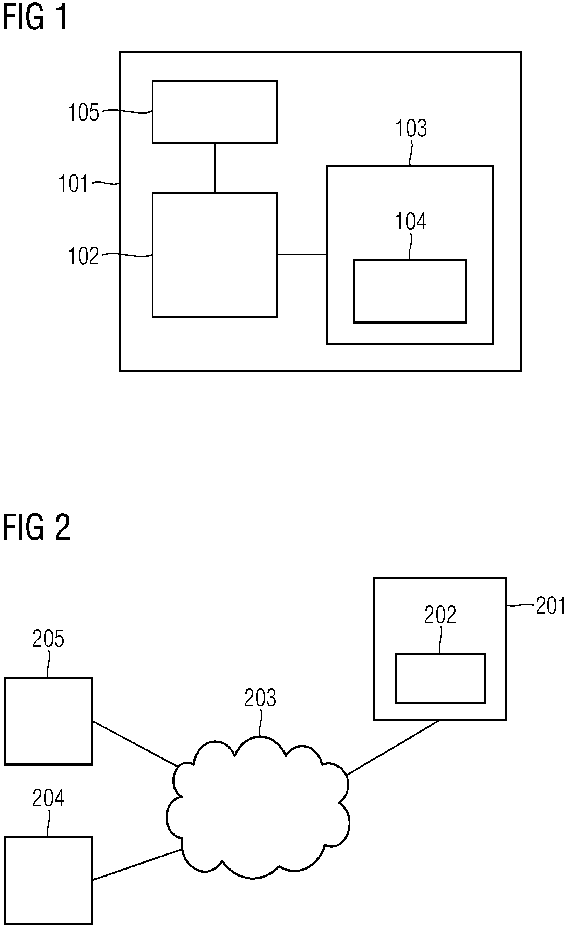

Fig. 1 shows one sample structure for computer-implementation of the invention which comprises:
- (101): computer system
- (102): processor
- (103): memory
- (104): computer program (product)
- (105): user interface

In this embodiment of the invention the computer program product 104 comprises program instructions for carrying out the invention. The computer program 104 is stored in the memory 103 which renders, among others, the memory and/or its related computer system 101 a provisioning device for the computer program product 104. The system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:
- (201): provisioning device
- (202): computer program (product)
- (203): computer network / Internet
- (204): computer system
- (205): mobile device / smartphone

In this embodiment the provisioning device 201 stores a computer program 202 which comprises program instructions for carrying out the invention. The provisioning device 201 provides the computer program 202 via a computer network / Internet 203. By way of example, a computer system 204 or a mobile device / smartphone 205 may load the computer program 202 and carry out the invention by executing the program instructions of the computer program 202.

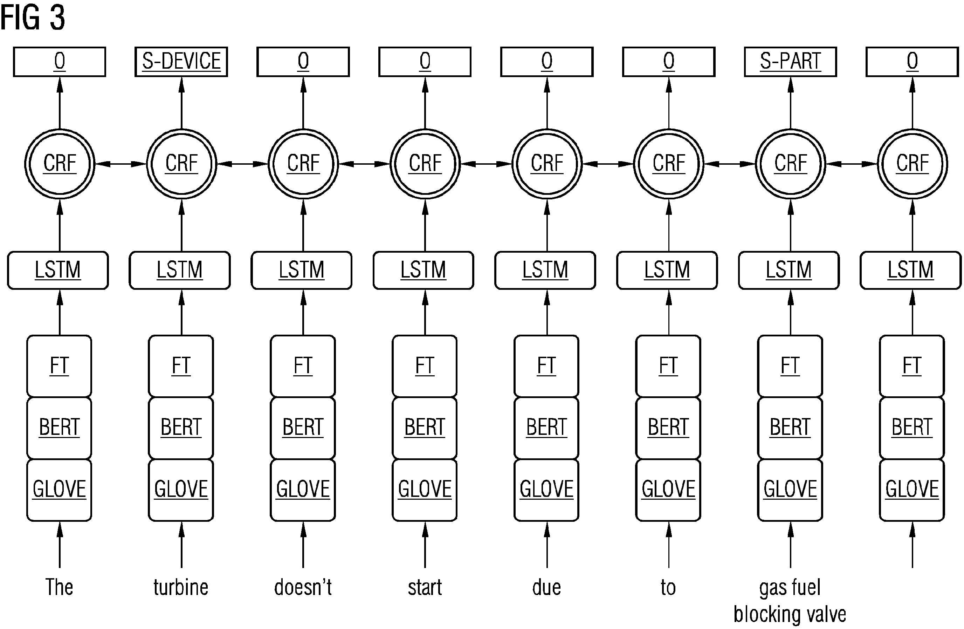

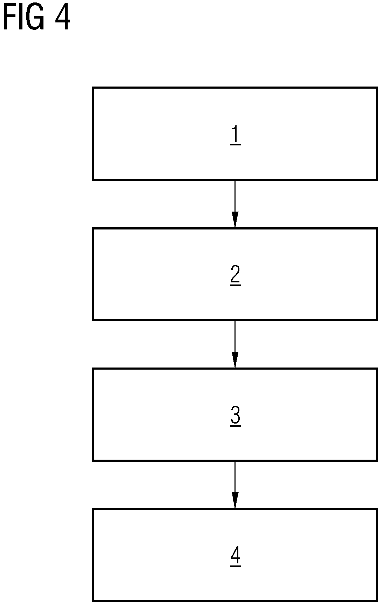

Preferably, the embodiments shown in Figs. 3 and 4 can be implemented with a structure as shown in Fig. 1 or Fig. 2.

Guillaume Lample, Miguel Ballesteros, Sandeep Subramanian, Kazuya Kawakami, Chris Dyer: Neural Architectures for Named-entity Recognition, Proceedings of NAACL 2016, arXiv:1603.01360 [cs.CL], available on the internet at https://doi.org/10.48550/arXiv.1603.01360 on 30.08.2022, disclose neural architectures for NER, in particular a bidirectional LSTM-CRF (BiLSTM-CRF) model for NER consisting of a bidirectional Long Short-term Memory Network (BiLSTM) and a sequential conditional random layer (CRF). The entire contents of that document are incorporated herein by reference.

Fig. 3 shows an embodiment that enriches the input representation of a NER model, for example a BiLSTM-CRF model, by concatenating several heterogeneous embeddings to enable complementary learning.

In Fig. 3, embeddings from three sources are combined via concatenation, including fastText embeddings FT, BERT embeddings BERT, and GloVe embeddings GLOVE to improve the input representation space of a standard BiLSTM-CRF model for NER. The BiLSTM-CRF model consists of a bidirectional Long Short-term Memory Network LSTM and a sequential conditional random layer CRF.

The task of named-entity recognition is to assign a named-entity label to every word in a sentence. A single named-entity could span several tokens within a sentence. For example, sentences can be represented in the IOBES tagging scheme, a variant of IOB commonly used for named-entity recognition.

The architecture shown in Fig. 3 chunks and labels a sequence of inputs forming a sentence ("The turbine doesn't start due to gas fuel blocking valve"). The word "turbine" is labeled as a device S-DEVICE, and the expression "gas fuel blocking valve" is labeled as a part S-PART. Tokens that are not recognized as named entities are labeled as otherwise O.

Since different kinds of embeddings have different model architectures and are trained on different corpora, they capture different aspects and attributes of language. Concatenation of these diverse heterogeneous embedding representations results in a richer embedding space which when used as the input to the NER model results in significant improvement.

Also, this design of input representation is flexible to even combine domain-specific industrial embeddings with general-purpose embeddings. Such a combination relaxes the burden of performing several ablation experiments to choose the right embedding model for an industrial NER task.

It is important to note that the concatenated heterogeneous embeddings can be plugged into any NER model which employs embeddings on the input layer.

Fig. 4 shows a flowchart of a possible exemplary embodiment of a method for named-entity recognition.

In an encoding operation 1, unstructured text is encoded into several heterogenous embeddings.

In a concatenating operation 2, the embeddings are concatenated.

In a feeding operation 3, the concatenated embeddings are fed via an input layer to a neural network.

In a performing operation 4, the neural network performs named-entity recognition.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

## Claims

1. A computer implemented method for named-entity recognition, wherein the following operations are performed by components, and wherein the components are software components executed by one or more processors and/or hardware components:
- encoding (1) unstructured text into several heterogenous embeddings,
- concatenating (2) the embeddings,
- feeding (3) the concatenated embeddings via an input layer to a neural network, and
- performing (4), by the neural network, named-entity recognition.

2. The method according to claim 1,
- wherein the several heterogenous embeddings have different model architectures and/or have been trained on different text corpora.

3. The method according to any of the preceding claims,
- wherein at least one of the several heterogenous embeddings is a general-purpose embedding, and
- wherein at least one of the several heterogeneous embeddings is a domain-specific industrial embedding.

4. The method according to any of the preceding claims,
- wherein at least one of the several heterogenous embeddings is a fastText embedding (FT), and/or
- wherein at least one of the several heterogenous embeddings is a BERT embedding (BERT), and/or
- wherein at least one of the several heterogenous embeddings is a GloVe embedding (GLOVE).

5. The method according to any of the preceding claims,
- wherein the neural network is a BiLSTM-CRF network consisting of a bidirectional Long Short-term Memory Network (LSTM) and a sequential conditional random layer (CRF).

6. A system for named-entity recognition, comprising:
- an encoder, configured for encoding unstructured text into several heterogenous embeddings, and
- a neural network,
- with an input layer configured for receiving a concatenation of the embeddings, and
- configured for performing named-entity recognition.

7. Computer program product with program instructions for carrying out a method according to one of the method claims.

8. Provision device for the computer program product according to the preceding claim, wherein the provision device stores and/or provides the computer program product.
